# EUROPEAN PATENT APPLICATION

(11) **EP 2 807 924 A1**
(43) Date of publication of application: **03.12.2014**
(21) Application number: 13169525.6
(22) Date of filing: 28.05.2013
(51) Int. Cl.: A01N 25/00, A01N 37/50, A01N 43/40, A01N 43/56, A01N 43/653, A01N 47/24, A01M 21/04, A01P 3/00

(54) **A method for combating fungal turfgrass pathogens**

(71) Applicant: BASF SE, 67056 Ludwigshafen (DE)
(72) Inventor: Keese, Renee, 27709 Research Triangle Park (US); Oliver, Glenn, W., Apex, NC 27502 (US); Warriner, Richard, A., Wake Forest, NC 27587 (US)

(57) **Abstract**

The present invention relates to a method for combating fungal turfgrass pathogens at a turfgrass locus, which comprises applying an effective amount of herein defined fungicides below the ground surface by means of mechanical or pressure methods. The present invention also relates to the use of at least one fungicide as defined herein in a method, which comprises applying an effective amount of herein defined fungicides below the ground surface by means of mechanical or pressure methods.

## Description

The present invention relates to a method for combating fungal turfgrass pathogens at a turfgrass locus, which comprises applying an effective amount of herein defined fungicides below the ground surface by means of mechanical or pressure methods. The present invention also relates to the use of at least one fungicide as defined herein in a method, which comprises applying an effective amount of herein defined fungicides below the ground surface by means of mechanical or pressure methods.

Most of the diseases that occur on turfgrasses are caused by fungi. As part of an overall chemical disease-control program fungicides and other pesticides are commonly applied as spray applications in both, curative and preventive use.

The present invention differs from the prior art in that it relates to a method for combating fungal turfgrass pathogens at a turfgrass locus using herein defined fungicides that are applied below the ground surface by means of high pressure flows.
The use of a mixture of azoxystrobin and propiconazole (Headway@) plus soil surfactant for fairy ring control in perennial ryegrass, using a Dryject® aerification machine for injections of said active ingredients below the ground surface, is described by M. A. Fidanza et al. in Plant Disease Management Reports 3:T069. Fairy ring symptoms reportedly were reduced from injection treatments, i) of the fungicides alone, ii) of fungicides plus soil surfactant, or, iii) of the soil surfactant alone. The fungicide was applied at a use rate of 1.59 kg/ha. The disclosed efficacy data, however, do not allow for the skilled person to conclude that there is an effect in terms of longer lasting control and better efficacy, even at reduced use rates, against phytopathogenic fungi caused by the combination of the particular method (i.e. delivering the active ingredients below ground surface) and/or fungicides when used by injection rather than by foliar application.
WO 2011106410 A2 relates to a high pressure injection system for applying pesticides below the ground surface. WO 2011106420 A1 relates to a method of treating soil adjacent a structure such as a house, a deck, any landscaping that may be near the house and/or deck, around utility poles and around plants. US 5370069 A is directed at an apparatus and a method for aerating and/or introducing a soil treatment agent into a ground surface. In none of these prior art documents a reference is made to a method for combating fungal turf grass pathogens at a turfgrass locus.

Methods described in the prior art aiming to achieve sufficient control of fungal turfgrass pathogens often require multiple spray applications of chemical fungicides to prevent spreading of the disease. However, even under good management conditions, diseases can still cause severe damage to turfgrasses. A number of problems associated with spray applications of pesticides have been recognized. Detrimental effects are, for example, user safety or the unintentional diffusion of pesticides or spray drift, pesticide contamination of surface water by run-off and other unexpected consequences on the turf ecosystem and/or the environment as well as phytotoxicity of the applied formulations causing yellowing or browning of the foliage. These negative side effects constitute major concerns for the user that need to be balanced in view of the benefits when using chemical means for disease control.

There is thus a constant need for improved and alternative methods that allow for efficient trufgrass management and which provide an improved and longer lasting control of fungal diseases, while at the same time providing convenience for the user and taking into account the above-mentioned environmental aspects.

The method of application according to the present invention surprisingly provides longer lasting control and better efficacy against soil-borne diseases. The invention also relates to an alternative method for the treatment of foliar diseases by way of applying the fungicides to the root-zone rather than the leaves of the turf grass, thereby surprisingly providing very good control. Further advantages of the method are significantly reduced use rates of active ingredient as compared to conventional use rates and such use rates disclosed in the prior art which had utilized an injection method. Further advantages are convenience of application inasmuch as several measures can be taken in one step, namely the application of the fungicide and, optionally, other soil treatment agents plus soil aeration. Furthermore the method according to the invention mitigates the risks of drift, run-off and phytotoxicity to the leaves associated with spray applications as it implies a well-directed and localized placement of the active compounds into the root-zone.

Accordingly the present invention relates to a method for combating fungal turfgrass pathogens at a turfgrass locus, which comprises applying an effective amount of at least one fungicide selected from the groups
A) inhibitors of complex III at Qₒ site: pyraclostrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxy-methyl)-phenyl)-2-methoxyimino-N-methyl-acetamide, pyribencarb, triclopyricarb/chlorodincarb, famoxadone or fenamidone including their N-oxides and/or agriculturally acceptable salts; or
B) inhibitors of complex II: benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1 H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide or 1,3,5-trimethyl-N-(1,1,3-trimethylindan-4-yl)pyrazole-4-carboxamide including their N-oxides and/or agriculturally acceptable salts; or
C) azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, prothioconazole, simeconazole, tebuconazole, tetraconazole, triadimefon, triadimenol, triticonazole, uniconazole or 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol including their N-oxides and/or agriculturally acceptable salts;
characterized in that the active ingredient is placed below the ground surface by means of mechanical or pressure methods.

The method according to the invention relates to applying the fungicides below the ground surface. The placement of the fungicides can be done by means of the following steps: a), perforation of the ground and, b), placing the active ingredient or a composition comprising it into the cavity produced in step a). According to one embodiment of the invention suitable means for perforation of the ground are fluid injections under pressure into the soil. In another embodiment perforation may be achieved by mechanical means, for example by producing punctures, for example by placing a tool such as tines, directly down, thereby punshing holes; or by causing slits cut in the turf by suitable means such as coulter discs. Placement of the fungicide can be achieved by either incorporating the active ingredient into the fluid for injection or by depositing the active ingredient in liquid or solid form into a preformed cavity.

The term "ground surface" used herein means the surface of the earth, as opposed to any synthetic manmade surface and usually means and includes the immediate crust as well as the soil to a distance of 120 centimeters below the ground surface or crust.

In a preferred embodiment of the invention the method relates to applying the fungicides by means of pressure flows, as has been described before in US 5370069 A. Devices that put the method described therein into practice are commercialized by DryJect® (http://www.dryject.com). Regarding such described methods the content of the application US 5370069 A shall form part of the content of the present application. The method is suited to perforate a ground surface for purposes of aerating the same and also for purposes of introducing the soil treatment agent below the ground surface. This method relies upon the passage of the driving fluid from a high pressure chamber into an area of reduced pressure, the so-called venturi chamber, through a venturi orifice. This will result in suction to the effect that the soil treatment agent is drawn into the venturi chamber and mixed with the driving fluid therein. This physical effect is commonly known as the "Venturi effect". Thereafter, in accordance with the method, the mixture of soil treatment agent and driving fluid is passed through a discharge nozzle and into a ground surface. This pressure jet can form a hole in the surface into which the material is being placed, or cause the material to be absorbed by the surface in a rapid fashion, such that soil disturbance is minimal. One benefit of the use of a pressure jet is that no mechanical effort is required to create a passageway as a predicate for the material to be placed below the surface of the soil. Nor is any other disturbance of the soil required, such as placing a tool directly down, thereby punshing holes below the ground surface.

The present invention therefore in one preferred embodiment relates to a method for perforating the ground surface and forming holes therein and introducing soil treatment agent in the holes formed therein, said method comprising the following steps: a) delivering driving fluid from a supply thereof; b) forming a stream of driving fluid under pressure; c) delivering a charge of soil treatment agent from a source of the soil treatment agent; d) causing a venturi effect by delivery of a pressure stream of driving fluid at a velocity sufficient to cause a venturi effect; e) introducing the charge of soil treatment agent through the venturi effect into contact with the pressure stream of driving fluid and allowing the soil treatment agent to be carried in the pressure stream of driving fluid to thereby form a soil treatment agent entrained stream of driving fluid; f) initially introducing a portion of the high pressure stream of driving fluid which has no soil treatment agent therein onto a ground surface to form a hole in the ground; g) ejecting the soil treatment agent entrained stream of driving fluid into the pre-formed hole in the ground in close proximity to the point where the high pressure stream of driving fluid contacts the soil treatment agent so that the soil treatment agent enters the pre-formed hole thereby allowing the soil treatment agent to remain in the hole; h) controlling the amount of time the pressure stream of driving fluid is delivered to the injector thereby allowing the soil treatment agent to remain in contact with the pressure stream of driving fluid for only a very short time, such that the soil treatment agent absorbs only a very small amount of water before being deposited in the ground; and i) further introducing a stream of driving fluid also under pressure after the charge of soil treatment agent has been introduced into the pre-formed hole to ensure that all soil treatment agent in the charge has been used and removed from the injector.

According to one embodiment of the invention the fungicide for combating fungal turfgrass pathogens is incorporated in the driving fluid of step a). According to a prefered embodiment of the invention the fungicide for combating fungal turf grass pathogens is incorporated in the driving fluid of step a) as a liquid agrochemical composition.

According to another embodiment of the invention the fungicide for combating fungal turfgrass pathogens is contained in the soil treatment agent introduced in the venturi chamber in step e). According to a prefered embodiment of the invention the fungicide for combating fungal turfgrass pathogens is contained in the soil treatment agent in step e) as a liquid agrochemical composition. According to another prefered embodiment of the invention the fungicide for combating fungalturf grass pathogens is contained in the soil treatment agent in step e) as a dry agrochemical composition.
The term "pressure flow" is meant to relate to methods which use pressure jets of a driving fluid, such as gases, e.g. air, or liquids, e.g. water or aqueous compositions, that entrain the soil treatment agent due to suction caused by the so-called venturi effect (Encyclopedia of Physics, J. Rosen, 2004, page 148).

"pressure" in the sense of the method according to the invention is to be understood as pressures of 5 bar to 500 bar during steps b), f) and/or g) of the pressure stream of driving fluid. Preferably the pressure applied is 150 bar to 400 bar. Most preferably the pressure applied is 150 bar to 250 bar.

According to one embodiment of the invention the soil treatment agent is introduced into the ground in individual discharges at selected distances. In one preferred embodiment of the invention the number of single applications per square meter ranges from 10 to 300. In another preferred embodiment of the invention the number of single applications per square meter ranges from 10 to 200. In another preferred embodiment of the invention the number of single applications per square meter ranges from 50 to 150. In another preferred embodiment of the invention the number of single applications per square meter ranges from 10 to 100, in particular from 10 to 50.

According to another preferred embodiment of the invention the placement of the fungicide is at a depth of 5 to 50 centimeters below the ground surface. In another preferred embodiment of the invention the placement of the fungicide is at a depth of 5 to 30 centimeters below the ground surface. In another preferred embodiment of the invention the placement of the fungicide is at a depth of 5 to 20 centimeters below the ground surface. In another preferred embodiment of the invention the placement of the fungicide is at a depth of 5 to 15 centimeters below the ground surface, in particular at a depth of 10 to 15 centimeters.

In one aspect the invention relates to a method for combating fungal turfgrass pathogens at a turfgrass locus, which comprises applying an effective amount of at least one fungicide selected from the groups A), B) or C) or agricultural compositions comprising them, wheras said fungicides or agricultural compositions can comprise further active ingredients, such as fungicides, insecticides or herbicides, preferably fungicides or insecticides. Preferably such mixtures comprise fungicides as a further active ingredient such as phosphonates like phosphatyl aluminum or phosphoric acids; phenylamides such as mefenoxam or metylaxyl; biological pesticides such as Bacillus spp. or Trichoderma spp.; Nematicides; Fertilizers; soil enhancers such as wetting agents, surfactants or humectants; or insecticides such as pyrroles, pyrethroids, neonicotinoids or voltage-dependent sodium channel blockers.

If mixtures of fungicides are used in the method of the present invention, such mixtures can be applied simultaneously, either jointly (e. g. as tank-mix) or separately, or in succession, wherein the time interval between the individual applications is selected to ensure that the active substance applied first still occurs at the site of action in a sufficient amount at the time of application of the further active substance(s). The order of application is not essential for working of the present invention.
In binary mixtures, i.e. compositions according to the invention comprising one fungicide selected from the groups A), B) or C) (component 1) and one further active substance (component 2), the weight ratio of component 1 and component 2 generally depends upon the properties of the active substances used, usually it is in the range of 1:100 to 100:1, regularly in the range of 1:50 to 50:1, preferably in the range of 1:20 to 20:1, more preferably in the range of 1:10 to 10:1 and in particular in the range of 1:3 to 3:1.
In ternary mixtures, i.e. compositions according to the invention comprising one fungicide selected from the groups A), B) or C) (component 1) and a first further active substance (component 2) and a second further active substance (component 3, the weight ratio of component 1 and component 2 depends upon the properties of the active substances used, preferably it is in the range of 1:50 to 50:1 and particularly in the range of 1:10 to 10:1, and the weight ratio of component 1 and component 3 preferably is in the range of 1:50 to 50:1 and particularly in the range of 1:10 to 10:1.

The mixtures of active substances can be prepared as compositions comprising besides the active ingridients at least one inert ingredient by usual means, e. g. by the means given below for the compositions of fungicides selected from the groups A), B) or C).
Concerning usual ingredients of such compositions reference is made to the explanations given for the compositions containing fungicide selected from the groups A), B) or C).
The mixtures of active substances according to the present invention are suitable as fungicides, as are the fungicides selected from the groups A), B) or C). They are distinguished by an outstanding effectiveness against a broad spectrum of phytopathogenic fungi, especially from the classes of the Ascomycetes, Basidiomycetes, Deuteromycetes and Peronosporomycetes (syn. Oomycetes). In addition, it is refered to the explanations regarding the fungicidal activity of the compounds and the compositions containing fungicides selected from the groups A), B) or C), respectively.

In a preferred embodiment of the present invention the fungicide is selected from picoxystrobin, pyraclostrobin, trifloxystrobin, boscalid, fluopyram, fluxapyroxad or penthiopyrad.

In a more preferred embodiment of the present invention the fungicide is selected from picoxystrobin, pyraclostrobin and trifloxystrobin.

In an equally more preferred embodiment of the present invention the fungicide is selected from boscalid, fluopyram, fluxapyroxad and penthiopyrad.

In an equally most preferred embodiment of the present invention the fungicide is picoxystrobin. In an equally most preferred embodiment of the present invention the fungicide is trifloxystrobin.

In a very most preferred embodiment of the present invention the fungicide is pyraclostrobin.

In an equally most preferred embodiment of the present invention the fungicide is fluopyram.
In an equally most preferred embodiment of the present invention the fungicide is fluxapyroxad.
In an equally most preferred embodiment of the present invention the fungicide is penthiopyrad.
In a very most preferred embodiment of the present invention the fungicide is boscalid.

In one embodiment of the present invention the fungicide is selected from azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, prothioconazole, simeconazole, tebuconazole, tetraconazole, triadimefon, triadimenol, triticonazole, uniconazole or 1-[*rel*-(2*S*;3*R*)-3-(2-chlorophenyl)-2-(2,4-difluorophenyl)-oxiranylmethyl]-5-thiocyanato-1H-[1,2,4]triazole and 2-[*rel*-(2*S*;3*R*)-3-(2-chlorophenyl)-2-(2,4-difluorophenyl)-oxiranylmethyl]-2H-[1,2,4]triazole-3-thiol.
In a further embodiment the fungicide is selected from cyproconazole, difenoconazole, epoxiconazolefluquinconazole, flusilazole, flutriafol, hexaconazole, ipconazole, metconazole, myclobutanil, prothioconazole, tebuconazole, tetraconazole, triticonazole or 1-[*rel*-(2*S*;3*R*)-3-(2-chlorophenyl)-2-(2,4-difluorophenyl)-oxiranylmethyl]-5-thiocyanato-1H-[1,2,4]triazole and 2-[*rel-*(2*S*;3*R*)-3-(2-chlorophenyl)-2-(2,4-difluorophenyl)-oxiranylmethyl]-2H-[1,2,4]triazole-3-thiol.
In still another preferrred embodiment the fungicide is selected from difenoconazole, metconazole, myclobutanil, tebuconazole, triadimefon and triticonazole.
In a most preferred embodiment the fungicide is triticonazole.

The term "effective amount" denotes an amount of the fungicides selected from the groups I) or II) or of the composition comprising them, which is sufficient for controlling harmful fungi on turfgrass varieties and which does not result in substantial damage to the treated plants. Such an amount is dependent on various factors, such as the fungal species to be controlled, the treated variety, the climatic conditions and the specific fungicides used. When employed in the methods of the present invention, the amounts of active substances applied are suitably selected from 0.001 to 2.5 kg per ha, preferably from 0.005 to 2.5 kg per ha, preferably from 0.05 to 2.5 kg per ha, preferably from 0.05 to 1.5 kg per ha, more preferably from 0.05 to 0.9 kg per ha, more preferably from 0.05 to 0.75 kg per ha, and in particular from 0.3 to 0.75 kg per ha.

In a preferred embodiment of the invention the method relates to applying the fungicides by means of pressure flows as described or preferably described above, wherein the fungicide is picoxystrobin, pyraclostrobin and trifloxystrobin, and the effective amount of the fungicide is as defined or preferably defined above, in particular from 0.05 to 0.75 kg per ha.
In a preferred embodiment of the invention the method relates to applying the fungicides by means of pressure flows as described or preferably described above, wherein the fungicide is pyraclostrobin, and the effective amount of the fungicide is as defined or preferably defined above, in particular from 0.05 to 0.75 kg per ha.

In another preferred embodiment of the invention the method relates to applying the fungicides by means of pressure flows as described or preferably described above, wherein the fungicide is selected from boscalid, fluopyram, fluxapyroxad and penthiopyrad, and the effective amount of the fungicide is as defined or preferably defined above, in particular from 0.05 to 0.75 kg per ha.

In another preferred embodiment of the invention the method relates to applying the fungicides by means of pressure flows as described or preferably described above, wherein the fungicide is boscalid, and the effective amount of the fungicide is as defined or preferably defined above, in particular from 0.05 to 0.75 kg per ha.

In another preferred embodiment of the invention the method relates to applying the fungicides by means of pressure flows as described or preferably described above, wherein the fungicide is fluxapyroxad, and the effective amount of the fungicide is as defined or preferably defined above, in particular from 0.05 to 0.75 kg per ha.

In another preferred embodiment of the invention the method relates to applying the fungicides by means of pressure flows as described or preferably described above, wherein the fungicide is difenoconazole, metconazole, myclobutanil, tebuconazole, triadimefon and triticonazole, and the effective amount of the fungicide is as defined or preferably defined above, in particular from 0.05 to 0.75 kg per ha.

In another preferred embodiment of the invention the method relates to applying the fungicides by means of pressure flows as described or preferably described above, wherein the fungicide is triticonazole, and the effective amount of the fungicide is as defined or preferably defined above, in particular from 0.05 to 0.75 kg per ha.

The term "soil treatment agent" herein either relates to a liquid, for example water or a liquid agrochemical composition, or it relates to particulate matter. The liquid or particulate matter may serve as an auxiliary suitable to carry the active compounds, i.e. fungicides selected from the group I) or II) according to the invention. A liquid composition according to the invention may be any type of the customary liquid formulations described below, it may also be obtained by way of dispersing or suspending conventional solid formulations in water or aqueous media or dissolving or emulgating liquid formulations in water.

Customary types of agrochemical compositions suitable for the use in a method according to the invention are, e. g. solutions, emulsions, suspensions, dusts, powders, pastes, granules and mixtures thereof.

Examples for composition types are suspensions (e.g. SC, OD, FS), emulsifiable concentrates (e.g. EC), emulsions (e.g. EW, EO, ES, ME), wettable powders or dusts (e.g. WP, SP, WS, DP, DS), granules (e.g. WG, SG, GR, FG, GG, MG), as well as gel formulations (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof. Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable tackifiers or binders are polyvinylpyrrolidons, polyvinylacetates, polyvinyl alcohols, polyacrylates, biological or synthetic waxes, and cellulose ethers.

Suitable particulate matter for the use in a method according to the invention are polymers with water retaining properties, solid plant nutrients, mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Examples for composition types and their preparation are:
i) Water-soluble concentrates (SL, LS)
   10-60 wt% of a fungicide selected from the groups I) or II) and 5-15 wt% wetting agent (e.g. alcohol alkoxylates) are dissolved in water and/or in a water-soluble solvent (e.g. alcohols) ad 100 wt%. The active substance dissolves upon dilution with water.
ii) Dispersible concentrates (DC)
   5-25 wt% of a fungicide selected from the groups I) or II) and 1-10 wt% dispersant (e. g. polyvinylpyrrolidone) are dissolved in organic solvent (e.g. cyclohexanone) ad 100 wt%. Dilution with water gives a dispersion.
iii) Emulsifiable concentrates (EC)
   15-70 wt% of a fungicide selected from the groups I) or II) and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.
iv) Emulsions (EW, EO, ES)
   5-40 wt% of a fungicide selected from the groups I) or II) and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.
v) Suspensions (SC, OD, FS)
   In an agitated ball mill, 20-60 wt% of a fungicide selected from the groups I) or II) are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type composition up to 40 wt% binder (e.g. polyvinylalcohol) is added.
vi) Water-dispersible granules and water-soluble granules (WG, SG)
   50-80 wt% of a fungicide selected from the groups I) or II) are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.
vii) Water-dispersible powders and water-soluble powders (WP, SP, WS)
   50-80 wt% of a fungicide selected from the groups I) or II) are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.
viii) Gel (GW, GF)
   In an agitated ball mill, 5-25 wt% of a fungicide selected from the groups I) or II) are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.
ix) Microemulsion (ME)
   5-20 wt% of a fungicide selected from the groups I) or II) are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamically stable microemulsion.
x) Microcapsules (CS)
   An oil phase comprising 5-50 wt% of a fungicide selected from the groups I) or II), 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a fungicide selected from the groups I) or II) according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.
xi) Dustable powders (DP, DS)
   1-10 wt% of a fungicide selected from the groups I) or II) are ground finely and mixed intimately with solid carrier (e.g. finely divided kaolin) ad 100 wt%.
xii) Granules (GR, FG)
   0.5-30 wt% of a fungicide selected from the groups I) or II) is ground finely and associated with solid carrier (e.g. silicate) ad 100 wt%. Granulation is achieved by extrusion, spray-drying or fluidized bed.
xiii) Ultra-low volume liquids (UL)
   1-50 wt% of a fungicide selected from the groups I) or II) are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum). Preferred formulations include EC or SC formulations of 100-750 g ai/L or granular, WG or WP formulations of 0.5 to 75% by weight of active substance.

Various types of oils, wetters, adjuvants, fertilizer, or micronutrients, and further pesticides (e.g. herbicides, insecticides, fungicides, growth regulators, safeners) may be added to the fungicides selected from the group I) or II) or the compositions comprising them as premix or, if appropriate not until immediately prior to use (tank mix). These agents can be admixed with the compositions according to the invention in a weight ratio of 1:100 to 100:1, preferably 1:10 to 10:1.

Examples of cool season turfgrasses are bluegrasses (Poa spp.), such as Kentucky bluegrass (Poa pratensis L.), rough bluegrass (Poa trivialis L.), Canada bluegrass (Poa compressa L.), annual bluegrass (Poa annua L.), upland bluegrass (Poa glaucantha Gaudin), wood bluegrass (Poa nemoralis L.), and bulbous bluegrass (Poa bulbosa L.); the bentgrasses and Redtop (Agrostis spp.), such as creeping bentgrass (Agrostis palustris Huds. or Agrostis stolonifera), colonial bentgrass (Agrostis tenuis Sibth.), velvet bentgrass (Agrostis canina L.), South German Mixed Bentgrass (Agrostis spp. including Agrostis tenius Sibth., Agrostis canina L., and Agrostis palustris Huds.), and Redtop (Agrostis alba L.); the fescues (Festuca spp.), such as red fescue (Festuca rubra L. spp. rubra) creeping fescue (Festuca rubra L.), chewings fescue (Festuca rubra commutata Gaud.), sheep fescue (Festuca ovina L.), hard fescue (Festuca longifolia Thuill.), hair fescue (Festucu capillata Lam.), tall fescue (Festuca arundinacea Schreb.), meadow fescue (Festuca elanor L.); the ryegrasses (Lolium spp.), such as annual ryegrass (Lolium multiflorum Lam.), perennial ryegrass (Lolium perenne L.), and italian ryegrass (Lolium multiflorum Lam.); and the wheatgrasses (Agropyron spp.), such as fairway wheatgrass (Agropyron cristatum (L.) Gaertn.), crested wheatgrass (Agropyron desertorum (Fisch.) Schult.), and western wheatgrass (Agropyron smithii Rydb.). Other cool season turfgrasses include beachgrass (Ammophila breviligulata Fern.), smooth bromegrass (Bromus inermis Leyss.), cattails such as Timothy (Phleum pratense L.), sand cattail (Phleum subulatum L.), orchardgrass (Dactylis glomerata L.), weeping Alkaligrass (Puccinellia distans (L.) Parl.), and crested dog's-tail (Cynosurus cristatus L.).

Examples of warm season turfgrasses include Bermudagrass (Cynodon spp. L. C. Rich), Zoysiagrass (Zoysia spp. Willd.), St. Augustinegrass (Stenotaphrum secundatum Walt Kuntze), Centipedegrass (Eremochloa ophiuroides Munro Hack.), Carpetgrass (Axonopus affinis Chase), Bahiagrass (Paspalum notatum Flugge), Kikuyugrass (Pennisetum clandestinum Hochst. ex Chiov.), Buffalograss (Buchloe dactyloids (Nutt.) Engelm.), Blue gramma (Bouteloua gracilis (H.B.K.) Lag. ex Griffiths), Seashore paspalum (Paspalum vaginatum Swartz), and Sideoats grama (Bouteloua curtipendula (Michx. Torr.).

According to one embodiment of the invention, the grass variety provided in the method according to the invention is cool season turfgrass. More preferably the grass variety is selected from Bluegrass, Bentgrass, Redtop, Fescue, and Ryegrass. According to a particularly preferred embodiment of the invention, the plant provided in the method is Bentgrass.

The term "turfgrass locus" refers to a location where grasses are grown as cultivated plants and in a purposive manner in order to establish a lawn such as, for example, in recreational context, a meadow in natural landscaping or in athletic fields, parks or golf-courses.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

According to one embodiment of the invention, the method relates to a turfgrass locus comprising an established turfgrass stand. The term "established turfgrass stand" is to be understood as turfgrass after sowing or sod or sprig-establishment at a growth stage equal to or higher than four leaves or multiple tillers.

Examples of soil inhabiting organisms that cause diseases in trufgrass include: Take all patch (Gaeumannomyces spp.), Large patch (Rhizoctonia solani AG 2 type in warm season grasses), Fairy ring (Lycoperdon or Lepista spp.) or Summer patch (Magnaporthe poae).

Examples of organisms which cause foliar diseases in trufgrass include Brown patch (Rhizoctonia solani), Dollar spot ((Sclerotinia homoeocarpa), Pythium blight (Pythium aphanidermatum), Red Thread (Laetisaria fuciformis) or Rust (Puccinia spp.).

According to a preferred embodiment of the invention the turfgrass pathogen controlled is selected from Gaeumannomyces spp., Rhizoctonia solani AG 2 type 2, Lycoperdon spp. or Lepista spp.. Most preferably the turfgrass pathogen controlled according to the invention is Gaeumannomyces spp.

The invention also relates to a method for improving plant health by treating a turfgrass locus, with an effective amount of fungicides selected from the group I) or II) according to the method of the invention.

The term "plant health" is to be understood to denote a condition of the truf grass which is determined by several indicators alone or in combination with each other such as plant vigor (e. g. improved plant growth and/or greener leaves ("greening effect")), quality (e. g. improved physical durability) and tolerance to abiotic and/or biotic stress.The above identified indicators for the health condition of a plant may be interdependent or may result from each other.

Examples of the action against harmful fungi

The following commercial fungicide formulations were used:
- Insignia SC Intrinsic Fungicide (comprising 250 g ai/L pyraclostrobin)
- Lexicon (comprising 333 g ai/L pyraclostrobin and 167 g ai/L fluxapyroxad)
- Pillar G (granular formulation comprising 0.38% by weight pyraclostrobin and 0.43% by weight triticonazole)

The fungicide was applied as both a foliar spray or injected into the ground through the DryJect machine. Injections were on 5 x 5 cm spacing with sufficient pressure to inject to a depth of 7-10 cm below ground surface. The DryJect machine was equipped with a liquid dosing attachment to meter and mix the fungicide with the water.

### Field Tests

### Use Example 1:

Treatments were applied as both a foliar spray and injected into the ground against Brown patch (*Rhizoctonia solani*) in bentgrass. Brown patch on the foliage was controlled by the injected fungicides. A second application was made 34 days after the first treatment. 34 days after the first treatment (34-DAT1) fungal infection was about the same for both types of application. The same study was evaluated at a later time, 67 days after the trial began and 33 days after the second treatment. Injected treatments of all fungicides provided better foliar disease control than foliar applications. The results are summarized in Table 1.

**Table 1**

| Active | application mode | application rate | % fungal infection 34-DAT1 | % fungal infection 33-DAT2 |
|---|---|---|---|---|
| Lexicon | foliar | 0.5 liter/ha | 3.3 | 8.3 |
| Lexicon | injection | 0.5 liter/ha | 3.8 | 6.3 |
| Pillar G | foliar | 147 kg/ha | 7.5 | 17.8 |
| Pillar G | injection | 147 kg/ha | 8.0 | 11.0 |
| Untreated control | | | 28.3 | 61.3 |

### Use Example 2:

A turfgrass area with established bentgrass was used to evaluate fairy ring control (*Lycoperdon spp.).* The data presented in Table 2 show initial infection at the day of the first treatment (0-DAT1) , 21 days after the first treatment (21-DAT1) and 12 days after the second treatment (12-DAT2). Injected fungicides provided greater disease reduction than foliar applications, i.e. improved long-lasting residual activity as compared to foliar application.

**Table 2**

| Active | application mode | application rate | % fungal infection 0-DAT1 | % fungal infection 21-DAT1 | % fungal infection 12-DAT2 |
|---|---|---|---|---|---|
| Insignia SC | foliar | 2.23 liter/ha | 21.3 | 32.5 | 16.3 |
| Insignia SC | injection | 2.23 liter/ha | 10.0 | 10.5 | 4.3 |
| Untreated control | | | 27.5 | 38 | 27.5 |

### Use Example 3:

A test area of established bentgrass was treated with fungicide, which was applied either as a foliar spray or injected into the ground. A second application was made 28 days after the first treatment (28-DAT1). Results obtained 13 days and 41 days after the second treatment (13-DAT2 and 41-DAT2 respectively) indicate the injected fungicide was providing greater control of *Gaeumannomyces spp.,* the Take all disease organism, in particular an improved long-lasting residual activity, as compared to foliar applications, which is shown in Table 3.

**Table 3**

| Active | application mode | application rate | % fungal infection 28-DAT1 | % fungal infection 13-DAT2 | % fungal infection 41-DAT2 |
|---|---|---|---|---|---|
| Insignia SC | foliar | 2.23 liter/ha | 9.8 | 8.2 | 6.0 |
| Insignia SC | injection | 2.23 liter/ha | 7.0 | 2.4 | 1.8 |
| Insignia SC | foliar | 1.72 liter/ha | 10.8 | 12.8 | 8.8 |
| Insignia SC | injection | 1.72 liter/ha | 7.0 | 2.4 | 0 |
| Untreated control | | | 24.2 | 21.8 | 6.8 |

### Use Example 4:

Dollar spot control (*Sclerotinia homoeocarpa*) was also observed following injected fungicide applications. The pathogen blights leaf tissues but does not affect turfgrass roots. The fungicides applied by injection also provided dollar spot control on bentgrass for 34 days following a single application as demonstrated in Table 4.

**Table 4**

| Active | application mode | application rate | % fungal infection |
|---|---|---|---|
| Insignia SC | foliar | 2.23 liter/ha | 3.8 |
| Insignia SC | injection | 2.23 liter/ha | 5.0 |
| Lexicon | foliar | 0.5 liter/ha | 0.3 |
| Lexicon | injection | 0.5 liter/ha | 9.8 |
| Pillar G | foliar | 147 kg/ha | 13.3 |
| Pillar G | injection | 147 kg/ha | 14.3 |
| Untreated control | | | 17.8 |

## Claims

1. A method for combating fungal turfgrass pathogens at a turfgrass locus, which comprises applying an effective amount of at least one fungicide selected from the groups
A) inhibitors of complex III at Qₒ site: pyraclostrobin, coumethoxystrobin, coumoxystrobin, dimoxystrobin, enestroburin, fenaminstrobin, fenoxy-strobin/flufenoxystrobin, fluoxastrobin, kresoxim-methyl, metominostrobin, orysastrobin, picoxystrobin, pyrametostrobin, pyraoxystrobin, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone or fenamidone including their N-oxides and/or agriculturally acceptable salts; or
B) inhibitors of complex II: benodanil, benzovindiflupyr, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1 H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 3-(difluoromethyl)-1,5-dimethyl-N-(1,1,3-trimethylindan-4-yl)pyrazole-4-carboxamide or 1,3,5-trimethyl-N-(1,1,3-trimethylindan-4-yl)pyrazole-4-carboxamide including their N-oxides and/or agriculturally acceptable salts; or
C) azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, prothioconazole, simeconazole, tebuconazole, tetraconazole, triadimefon, triadimenol, triticonazole, uniconazole or 1-[*rel*-(2*S*;3*R*)-3-(2-chlorophenyl)-2-(2,4-difluorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol including their N-oxides and/or agriculturally acceptable salts;
**characterized in that** the active ingredient is placed below the ground surface by means of mechanical or pressure methods.

2. A method according to claim 1 or 2, wherein said turfgrass locus comprises an established turfgrass stand.

3. A method according to any one of claims 1 to 3, wherein the turfgrass variety is Bentgrass.

4. A method according to any one of claims 1 to 4, wherein the trufgrass pathogen is Gaeumannomyces spp.

5. A method according to any one of claims 1 to 5, wherein the fungicide is pyraclostrobin.

6. A method according to any one of claims 1 to 6, wherein the effective amount of application of the fungicide ranges from 50 to 3000 g active ingredient per hectare.

7. A method according to any one of claims 1 to 7, comprising applying at least one further pesticide.

8. Use of at least one fungicide selected from the groups A), B) or C) as defined in claim 1 in a method as defined in any one of claims 1 to 7, wherein such method comprises applying the fungicides by means of pressure flows.
